Europäisches Patentamt

European Patent Office

Office européen des brevets

(11) Publication number: **0 508 401 A2**

# EUROPEAN PATENT APPLICATION

(21) Application number: **92106067.9**

(22) Date of filing: **08.04.92**

(51) Int. Cl.5: **H04L 27/14**

(30) Priority: **09.04.91 JP 76430/91**

(43) Date of publication of application:
**14.10.92 Bulletin 92/42**

(84) Designated Contracting States:
**CH DE ES GB LI NL**

(71) Applicant: **NEC CORPORATION**
**7-1, Shiba 5-chome Minato-ku**
**Tokyo 108-01(JP)**

(72) Inventor: **Minami, Yoichiro, c/o NEC**
**Corporation**
**7-1, Shiba 5-chome, Minato-ku**
**Tokyo(JP)**

(74) Representative: **Vossius & Partner**
**Siebertstrasse 4 P.O. Box 86 07 67**
**W-8000 München 80(DE)**

(54) Direct-conversion FSK receiver with orthogonal demodulation.

(57) An FSK (Frequency Shift Keying) receiver capable of reducing the deterioration of sensitivity suppression ascribable to interference waves despite the use of an orthogonal detection type reception system. Mixers for generating baseband signals are followed by high pass filters, low pass filters, and an orthogonal detection modulator. The baseband signals from the mixers are each applied to respective one of the high pass filters while the output signals of the high pass filters are fed to the associated low pass filters. The demodulator processes the output signal of the low pass filters to produce a demodulated signal. The high pass filters attenuate the demodulated signals of interference waves.

Fig. 1

The present invention relates to an FSK (Frequency Shift Keying) receiver and, more particularly, to an FSK receiver implemented with an orthogonal detection type reception system.

The remarkable advance of IC (Integrated Circuit) technologies has reduced the size of receivers to a considerable degree. Regarding radio apparatuses, however, some elements cannot be integrated or miniaturized since the traditional circuitry has not been drastically changed, obstructing the trend toward miniaturization. In a superheterodyne receiver, for example, high frequency and intermediate frequency filters, among others, still occupy a substantial area and are the bottleneck to a small size and light weight receiver configuration. An FSK receiver using an orthogonal detection type reception system is a recent implementation for the reduction of the size and weight of a receiver. The orthogonal detection type reception system uses a local oscillation frequency equal to the channel frequency and has mixers for extracting the beat of the local oscillation frequency, and low pass filters for producing only baseband signals. After the beat has been limited by limiters, the baseband signals are processed to produce a demodulated signal.

In an FSK receiver using the above-described type of reception system, the intermediate frequency is zero since the channel frequency and the local oscillation frequency are coincident, as stated above. Hence, this type of receiver is free from image frequency. It follows that a high frequency amplifier and an intermediate frequency amplifier do not need any filter having selectivity high enough to attenuate image frequency, realizing a small size and light weight receiver. Moreover, since channel filters for attenuating interference waves on nearby channels can be constituted by low frequency active filters since the intermediate frequency is zero. The channel filters, therefore, can be configured on an integrated circuit.

It has been customary with the FSK receiver to use low pass filters as the above-mentioned channel filters. This brings about a problem when interference waves have undergone modulation. Specifically, an amplifier preceding the channel filters demodulates even the interference waves due to nonlinearity thereof when the field strength of the interference waves is great. The demodulated interference waves turn out baseband signals to suppress sensitivity.

It is therefore an object of the present invention to provide an FSK receiver capable of reducing the degradation of sensitivity suppression due to interference waves despite the use of the orthogonal detection type reception system.

An FSK receiver of the present invention comprises a mixer for generating a baseband signal by receiving a modulated wave having been modulated in frequency by a binary digital signal and a local oscillation frequency fed from a local oscillator and coincident with the modulated wave in frequency, a band pass filter to which the baseband signal is applied from the mixer, and an orthogonal detection demodulator for processing an output signal of the band pass filter to produce a demodulated signal.

Another FSK (Frequency Shift Keying) receiver of the present invention comprises a first mixer for generating first baseband signal in response to a modulated wave having been modulated in frequency by binary signal and a first local frequency signal fed from a local oscillator and coincident with the modulated wave in frequency, a second mixer for generating second baseband signal in response to the modulated wave and a second local frequency signal which is $\pi/2$ phase shifted relative to the first local frequency signal, first and second band pass filter responsive to the first and second baseband signals to generate first filtered signal and second filtered signal, respectively, and an orthogonal detection demodulating for processing the first and second signals to produce a demodulated signal.

The above and other objects, features and advantages of the present invention will become more apparent from the following detailed description taken with the accompanying drawings in which:

FIG. 1 is a block diagram schematically showing an FSK receiver embodying the present invention;

FIG. 2 is a block diagram schematically showing a modified embodiment of the present invention; and

FIG. 3 is a schematic block diagram showing a conventional FSK receiver.

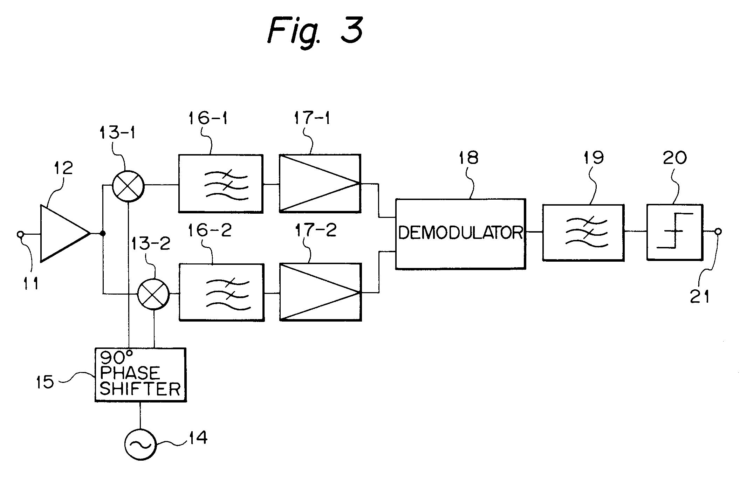

To better understand the present invention, a brief reference will be made to a conventional FSK receiver, shown in FIG. 3. As shown, the FSK receiver has an input terminal 11 to which a received wave having been modulated in frequency by a binary digital signal, i.e., a mark and a space is applied. The received wave is amplified by a high frequency amplifier 12 and then split into two. One split portion is fed to a first mixer 13-1 while the other split portion is fed to a second mixer 13-2. A local oscillator 14 delivers a local oscillation frequency to a 90° phase shifter 15. The 90° phase shifter 15 rotates the phase of the local frequency by +45 degrees and -45 degrees and delivers each of the resulting frequencies to respective one of the mixers 13-1 and 13-2. The mixers 13-1 and 13-2, therefore, convert the signals shifted in phase by 90 degrees from each other to baseband signals. The baseband signals have turn out beat frequency since the channel frequency and the local oscillation frequency are coincident. The outputs of mixers 13-1 and 13-2 are applied to a first and a second low pass filters 16-1 and 16-2, respectively. The low pass filters 16-1 and 16-2 are used to separate only the baseband signals and to limit the frequency band of noise. The baseband signals from the low pass filters 16-1 and 16-2 are fed to and binarized by a first and a second limiters 17-1 and 17-2, respectively. The resulting binary signals from the limiters 17-1 and 17-2 are demodulated by a demodulator 18 to reproduce data. The demodulated signal from the demodulator 18 is applied to a low pass filter 19 for removing noise and then to a comparator 20 for binarization. The binary digital signal from the comparator 20 is fed out via an output terminal 21.

When the conventional FSK receiver is implemented with the orthogonal detection type reception system, it is possible to omit a substantial number of circuit elements including a high frequency filter and an intermediate frequency filter and, therefore, to reduce the overall size and weight of the receiver. However, the problem with the conventional FSK receiver is that the sensitivity is suppressed by interference waves due to the low pass filters 16-1 and 16-2, as discussed earlier. The conventional FSK receiver is described in U. S. Patent 4, 254, 503.

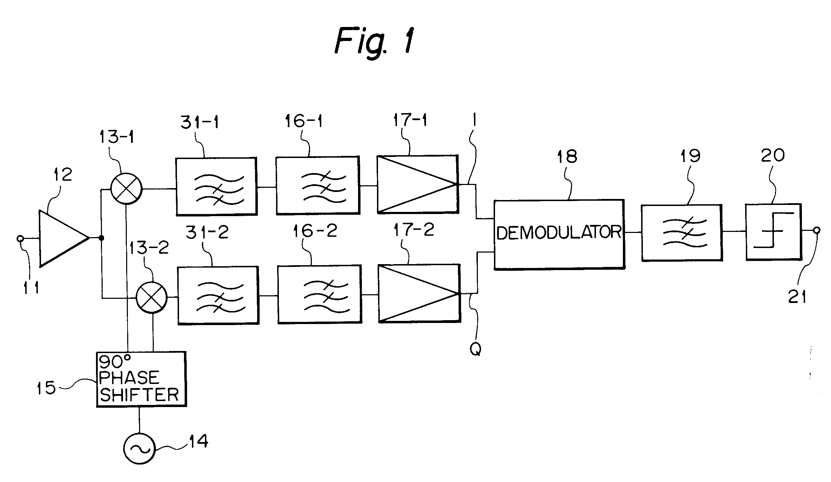

Referring to FIG. 1, an FSK receiver embodying the present invention is shown. As shown, the receiver includes an input terminal 11 to which a received wave having been modulated by a binary digital signal is applied, as in the case of the conventional receiver. The received wave is amplified by a high frequency amplifier 12 and then split into two. The two split portions are applied to a first and a second mixer 13-1 and 13-2, respectively. A local oscillator 14 feeds a local oscillation frequency to a 90° phase shifter 15. The 90° phase shifter 15 rotates the phase of the local oscillation frequency by +45 degrees and -45 degrees. The resulting signals shifted in phase by 90 degrees relative to each other are fed from the 90° phase shifter 15 to mixers 13-1 and 13-2, respectively. The mixers 13-1 and 13-2 convert the input signals to baseband signals. Again, the baseband signal turn out beat frequency since the channel frequency and the local oscillation frequency are coincident.

The baseband signals from the mixers 13-1 and 13-2 are applied to a first and a second high pass filter 31-1 and 31-2, respectively. The high pass filters 31-1 and 31-2 attenuate the baseband components of interference waves and are the characteristic features of the illustrative embodiment. Specifically, when an amplifier is included in the circuitry following the mixers 13-1 and 13-2, it is likely that the demodulated signals of interference waves are generated as baseband components due to the nonlinearity of the amplifier. The high pass filters 31-1 and 31-2 serve to attenuate such undesirable baseband components. For example, assuming that the transmission rate is 512 bits per second, a baseband component whose frequency is 256 hertz is generated. Assume that the high pass filters 31-1 and 31-2 are each implemented by a second order butterworth, and that they have a cut-off frequency of 2.5 kilohertz, then the amount of attenuation is about 40 decibels. Experiments showed that the sensitivitiy suppression is reduced by about 5 decibels when the attenuation from the pass band is 15 decibels.

The signals from the high pass filters 31-1 and 31-2 are fed to a first and a second low pass filter 16-1 and 16-2, respectively. The low pass filters 16-1 and 16-2 are used to separate only the baseband signals and to limit the frequency band of noise. The baseband signals from the low pass filters 16-1 and 16-2 are applied to a first and a second limiter 17-1 and 17-2, respectively. As a result, binary signals I and Q appear on the output terminals of the limiters 17-1 and 17-2, respectively. The signals I and Q are delivered to a demodulator 18 for reproducing data. The demodulator 18 may simply be implemented as a D-type flip-flop circuit which receives the signal I at a clock input terminal CL and the signal Q at a data input terminal D. Then, the demodulator 18 counts data at each positive-going edge of the clock while producing an output L. As the signals I and Q change in phase by 90 degrees, the output L of the demodulator 18 changes in the same manner as the signals I and Q to thereby reproduce data. The demodulation operation of D-type flip-flop or the demodulator 18 is described more minutely in U.S. Patent 4,254,503.

The demodulated signal from the demodulator 18 is applied to a low pass filter 19 for removing noise and then to a comparator 20 for binarization. The resulting binary digital signal from the comparator 20 is fed out via an output terminal 21.

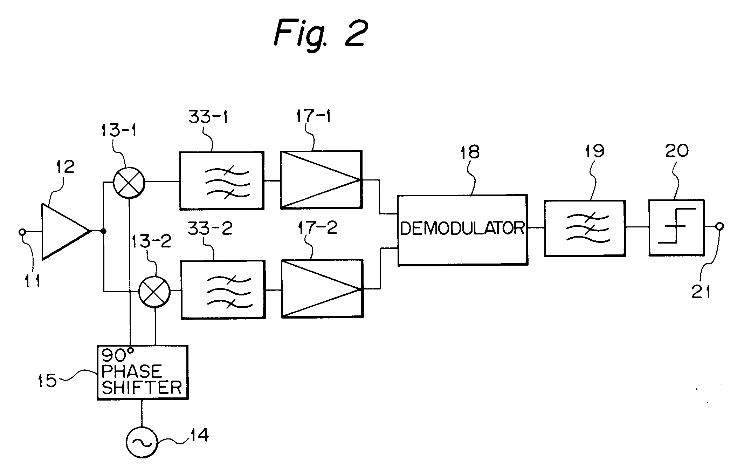

FIG. 2 shows a modification of the FSK receiver of FIG. 1. In FIG. 2, the same components as the components shown in FIG. 1 are designated by the same reference numerals, and redundant description will be avoided for simplicity. As shown, the modified FSK receiver includes a first and a second band pass filter 33-1 and 33-2 equivalent in characteristic with the combination of the high pass filters 31-1 and 31-2 and low pass filters 16-1 and 16-2 shown in FIG. 1. Of course, the receiver of FIG. 2 achieves the same advantages as the receiver of FIG. 1 since only the type of filters is changed.

In summary, it will be seen that the present invention provides an FSK receiver in which low pass filters for attenuating channel suppression are each preceded by a high pass filter to attenuate interference waves having lowered to the baseband due to channel distortions. This is successful in reducing the degradation of sensitivity ascribable to interference waves. In addition, by replacing the high pass filters and low pass filters with band pass filters, the invention reduces the number of circuit elemens and thereby reduces the overall size of the circuitry while enhancing reliable operations.

## Claims

1. An FSK (Frequency Shift Keying) receiver comprising:

   mixer means for generating a baseband signal by receiving a modulated wave having been modulated in frequency by a binary digital signal and a local oscillation frequency fed from a local oscillator and coincident with said modulated wave in frequency;

   band pass filter means to which said baseband signal is applied from said mixer means; and

   orthogonal detection demodulating means for processing an output signal of said band pass filter means to produce a demodulated signal.

2. A receiver as claimed in claim 1, wherein said band pass filter means comprises high pass filter means to which said baseband signal is applied and low pass filter means to which an output signal of said high pass filter means is applied.

3. An FSK (Frequency Shift Keying) receiver comprising:

   first mixer means for generating first baseband signal in response to a modulated wave having been modulated in frequency by binary signal and a first local frequency signal fed from a local oscillator and coincident with said modulated wave in frequency;

   second mixer means for generating second baseband signal in response to said modulated wave and a second local frequency signal which is $\pi/2$ phase shifted relative to said first local frequency signal;

   first and second band pass filter means responsive to said first and second baseband signals to generate first filtered signal and second filtered signal, respectively; and

   orthogonal detection demodulating means for processing said first and second signals to produce a demodulated signal.

4. A receiver as claimed in claim 3, wherein said first band pass filter means comprises first high pass filter means responsive to said first baseband signal and first low pass filter means responsive to an output signal of said first high pass filter means to generate said first filtered signal, and said second band pass filter means comprises second high pass filter means responsive to said second baseband signal and second low pass filter means responsive to an output signal of said second high pass filter means to generate said second filtered signal.

5. A receiver as claimed in claim 4, wherein said orthogonal detection demodulating means comprises D-type flip-flop having a data input terminal to which one of said first and second filtered signals is applied and a clock input terminal to which the other of said first and second filtered signal is applied.

Fig. 1

Fig. 2

EP 0 508 401 A2

# Fig. 3

EP 0 508 401 A2